# FASCICULE DE BREVET EUROPEEN

(11) **EP 1 298 309 B1**
(45) Date de publication et mention de la délivrance du brevet: **31.05.2006**
(21) Numéro de dépôt: 02292362.7
(22) Date de dépôt: 26.09.2002
(51) Int. Cl.: F02K 1/72, F02K 1/76

(54) **Système de verrouillage sur un inverseur de poussée à grilles**
Blockierungssystem für eine Strahlumkehrvorrichtung mit verschiebbarem Bläsergehäuse
Locking system for a thrust reverser with a sliding fan housing

(30) Priorité: 27.09.2001 FR 0112405
(43) Date de publication de la demande: 02.04.2003
(73) Titulaire: AIRCELLE, 76700 Gonfreville l'Orcher (FR)
(72) Inventeur: Dehu, Michel Philippe, 31170 Tournefeuille (FR); Lore, Xavier Raymond Yves, 76210 Beuzeville La Grenier (FR)
(74) Mandataire: Chevalier, Renaud Philippe

(56) Documents cités:
- EP-A- 0 055 163
- EP-A- 0 315 524
- WO-A-96/12881

## Description

L'invention se rapporte aux inverseurs de poussée du type "à grilles" entourant les turboréacteurs à doubles flux d'avions, ses inverseurs comportant une partie fixe et une partie mobile, et plus particulièrement à un système de verrouillage permettant d'immobiliser la partie mobile sur la partie fixe.

Les inverseurs de poussée sont des dispositifs bien connus permettant de détourner temporairement vers l'avant de l'avion le flux de gaz de propulsion produit par le turboréacteur du type "à double flux". L'inverseur a une forme générale de révolution entourant le turboréacteur et il est sensiblement concentrique à lui. L'inverseur comporte une partie fixe et au moins une partie mobile. Schématiquement, la partie fixe est constituée d'un cadre avant et d'un cadre arrière, tous deux de forme annulaire, reliés par une pluralité de poutres longitudinales à la façon d'une cage d'écureuil. Le cadre avant, le cadre arrière et les poutres longitudinales sont des structures creuses rigides et légères qui assurent la rigidité de l'inverseur. L'ensemble est entouré par un capotage extérieur et un capotage intérieur. Entre les poutres longitudinales sont aménagées des ouvertures radiales équipées d'une pluralité de petits volets formant ensemble des grilles, ces volets étant susceptibles de dévier vers l'avant le flux froid du turboréacteur à double flux. La partie mobile effectue un mouvement de translation vers l'avant ou vers l'arrière afin de recouvrir ou de dégager les ouvertures radiales. Les parties mobiles sont guidées en translations par des rails coulissant dans des glissières parallèles, ces glissières étant attachées aux poutres longitudinales. Les parties mobiles sont commandées par des vérins ordinairement attachés au cadre avant.

Les parties mobiles sont maintenues en position fermée par des verrous dits "principaux", ces verrous étant habituellement disposés sur le cadre avant, ces verrous attrapant les parties mobiles par leurs extrémités avant. Les verrous principaux peuvent devenir inopérant suite à la rupture d'un rotor ou d'une aube du turboréacteur, cette rupture provoquant la projection de débris autours du turboréacteur, ces débris venant impacter l'inverseur et étant susceptibles de déformer l'inverseur et/ou de détériorer des verrous.

Les parties mobiles risquent alors de se déplacer en position ouverte, ce qui provoquerait une inversion de poussée accidentelle et catastrophique pendant le vol de l'avion. Pour réduire très sensiblement ce risque, on dispose des verrous secondaires à des endroits différents des verrous principaux, par exemple sur les poutres longitudinales. Mais le risque de voir l'inverseur se déformer sous impact simultanément au niveau des verrous principaux et au niveau des verrous secondaires n'est pas nul. On peut prévenir ce risque en multipliant les verrous, mais on augmente alors le risque de voir un verrou ne pas s'ouvrir au moment où le pilote de l'avion déclenche une inversion de poussée, l'inverseur de poussée devenant en conséquence inopérant.

Les verrous sont habituellement du type "à crochet", c'est-à-dire que le pêne est en forme de crochet et retient un galet disposé à l'extrémité d'un tirant, l'autre extrémité du tirant étant solidaire d'une partie mobile alors que le corps du verrou est attaché à la structure fixe. De tels verrous présentent cependant des inconvénients :
- Leur efficacité reste limitée en cas d'impact, car le galet peut sortir du crochet sous l'effet de la déformation de l'inverseur, ou bien le crochet ou le tirant peuvent se rompre.
- Ces verrous sont encombrants et deviennent difficiles à disposer lorsque l'inverseur est très mince, c'est-à-dire que la distance entre le capotage intérieur et le capotage extérieur est réduite.
- Aux endroits où ils sont attachés, ces verrous génèrent des couples importants et il faut renforcer par des ferrures la structure fixe et les parties mobiles à ces endroits, ces ferrures présentant l'inconvénient d'alourdir l'inverseur et d'en augmenter le coût.

On connaît également la demande de brevet européen EP 0 315 524 qui décrit un inverseur de poussée conforme au préambule de la revendication 1 de la présente demande.

Un premier problème à résoudre est de réaliser un système de verrouillage sur un inverseur de poussée du type "à grilles", ce système devant être insensible aux impacts et aux déformations accidentelles de l'inverseur pouvant résulter de ces impacts.

Un second problème à résoudre est de rendre ce système de verrouillage peu encombrant et susceptible d'être disposé entre les parois des inverseurs très minces.

Un troisième problème à résoudre est de réaliser un système de verrouillage sur un inverseur de poussée du type "à grilles" qui ne génère pas de couples aux endroits où ils sont attachés sur l'inverseur.

Pour résoudre le premier problème, l'invention propose un inverseur de poussée à grille pour turboréacteur à double flux comportant une pluralité d'ouvertures radiales séparées par des poutres longitudinales, les ouvertures radiales étant occultées par des parties mobiles se déplaçant dans le sens de la fermeture, et étant dégagées lorsque ces parties mobiles se déplacent dans le sens de l'ouverture, ledit inverseur comportant des moyens de guidage des parties mobiles, les moyens de guidage comportant des rails attachés aux parties mobiles et des glissières attachées aux poutres longitudinales, les rails coulissant dans les glissières, et ledit inverseur étant équipé d'un système de verrouillage comportant des verrous, caractérisé en ce que les verrous sont fixés au niveau de l'extrémité de chaque glissière dans le sens de l'ouverture, chaque verrou comportant un pêne positionné dans l'alignement de la glissière correspondante, le pêne étant mobile entre une position verrouillée et une position ouverte, le pêne en position verrouillée faisant obstacle au déplacement du rail dans le sens de l'ouverture quand ce rail est rentré dans la glissière, le pêne en position ouverte ne faisant plus obstacle au déplacement du rail dans le sens de l'ouverture.

Avec une telle disposition, l'extrémité de la glissière et le verrou se déplacent dans l'espace sensiblement de la même manière lorsque la partie fixe se déforme puisque le verrou est au voisinage de l'extrémité de la glissière. Le pêne reste donc sensiblement dans l'alignement de la glissière au voisinage de son extrémité et le déplacement de la partie mobile dans le sens de l'ouverture est impossible tant que le pêne est en position fermée, ce qui résout le premier problème.

Lorsqu'il est en position fermée, le pêne a pour effet d'emprisonner le rail dans la glissière, ces deux pièces étant par nature des pièces mécaniques résistantes, ce qui rend le système de verrouillage peu sensible aux impacts et résout le second problème. A noter que cet emprisonnement du rail dans la glissière présente aussi l'avantage d'assurer la rétention des parties mobiles, même en cas de très gros dégâts.

Le troisième problème est résolu par le fait que :
- le verrou ne génère qu'un couple très limité à l'endroit où il est attaché sur la structure fixe puisqu'il est disposé au voisinage de l'extrémité de la glissière,
- le verrou ne génère aucun couple sur le rail, puisqu'il est disposé dans l'alignement de la glissière et donc du rail.

L'invention sera mieux comprise et ses avantages apparaîtront plus clairement au de la description détaillée qui va suivre et des figures annexées.
La figure 1 illustre la structure générale d'un inverseur de poussée à grilles dont les parties mobiles sont en position ouverte.
La figure 2 illustre en perspective un exemple de système de verrouillage selon l'invention..
La figure 3 illustre ce même système de verrouillage en plan, le verrou étant en position ouverte.
La figure 4 montre par une coupe locale selon A la disposition du rail rentré dans la glissière, le pêne étant en position ouverte.
La figure 5 montre par une coupe locale selon A la disposition du rail sortant de la glissière, le pêne étant également en position ouverte.
La figure 6 illustre par une vue en plan ce même exemple, le verrou étant en position fermée.
La figure 7 montre par une vue en coupe locale le rail verrouillé dans la glissière.
La figure 8 illustre par cette même vue en coupe un dispositif d'inhibition empêchant l'ouverture volontaire ou involontaire de l'inverseur.

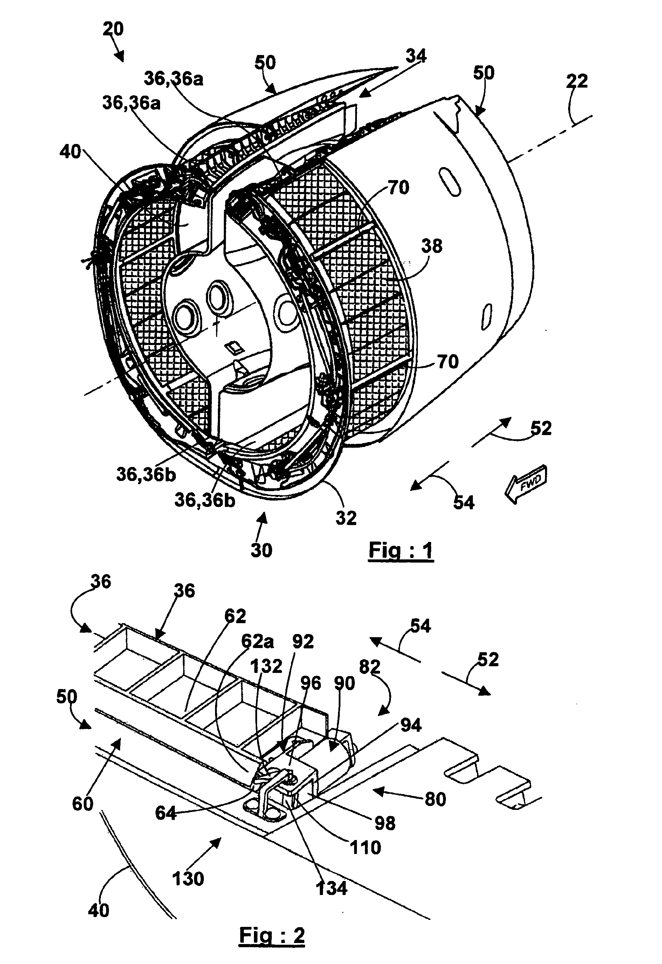

On se reportera en premier lieu à la figure 1. L'inverseur de poussée 20 a sensiblement une forme générale de révolution autour de l'axe géométrique 22 et il entoure un turboréacteur non représenté du type dit "à double flux" centré également sur l'axe géométrique 22.

L'inverseur 20 est du type dit "à grilles" bien connu. Il comporte une structure fixe 30 constituée par un cadre avant 32 et un cadre arrière référencé 34 mais non visible sur la figure 1, le cadre avant 32 et le cadre arrière 34 étant reliés entre eux par des poutres longitudinales 36 sensiblement parallèles à l'axe géométrique 22. Le cadre avant 32 et le cadre arrière 34 ont chacun la forme d'un anneau centré sur l'axe géométrique 22. Les poutres longitudinales 36 ont leurs extrémités avant attachées au cadre avant 32 et leur extrémités arrières attachées au cadre arrière 34. L'ensemble des cadres et des poutres forme une cage d'écureuil supportant deux capotages 40. Le premier capotage 40 est intérieur face à l'axe géométrique 22 et assure l'écoulement du flux généré par le turboréacteur. Le second capotage, non visible sur la figure 1 car recouvert par les parties mobiles 50 décrites plus loin, est extérieur et assure l'écoulement de l'air autour de l'inverseur. La figure 1 illustre un modèle d'inverseur 20 qui ne comporte que deux poutres longitudinales 36 diamétralement opposées par rapport à l'axe géométrique 22, la première poutre longitudinale 36a dite "à 12 heures" étant en regard du mât de l'avion soit habituellement en haut de l'inverseur 20, la seconde poutre longitudinale 36b dite "à 6 heures" étant diamétralement opposée à la première par rapport à l'axe géométrique 22, soit habituellement en bas de l'inverseur 20. A noter que certains modèles d'inverseur ne comportent pas de cadre arrière 34, ce qui ne change rien à l'invention. A noter aussi que la figure 1 illustre un inverseur 20 divisé en deux demi coquilles assemblées autour du turboréacteur, la poutre longitudinale "à 12 heures" 36a et la poutre longitudinale "à 6 heures" 36b étant en conséquence divisées elles-mêmes en deux dans le sens de la longueur, ceci étant également sans conséquences sur l'invention.
La structure fixe 30 comporte ainsi des ouvertures radiales 38 délimitées chacune vers l'avant par le cadre avant 32, vers l'arrière par le cadre arrière 34 et séparés entre elles par les poutres longitudinales 36.
Pour des raisons évidentes de rigidité et de légèreté, les constituants de la structure fixe 30 sont creux et constitués de parois minces, par exemple en tôle ou en matériau composite à base de résine thermodurcissable renforcée de fibres ou de tissus. Une telle structure fixe 30 reste cependant susceptible de se déformer sous l'impact de débris résultant de la rupture d'une aube voire d'un rotor du turboréacteur.

On se reportera maintenant aux figures 1 et 2. L'inverseur 20 comporte également des parties mobiles 50 susceptibles de recouvrir les ouvertures radiales 38 par une translation vers l'avant dans le sens de la fermeture 54 ou de les découvrir par une translation opposée vers l'arrière dans le sens de l'ouverture 52, ces translations s'effectuant habituellement mais non obligatoirement parallèlement à l'axe géométrique 22. A noter que dans cet exemple qui représente un inverseur courant, le sens de l'ouverture 52 correspond à un déplacement vers l'arrière ou l'aval de l'inverseur, alors que le sens de la fermeture 53 correspond à un déplacement vers l'avant ou l'amont de l'inverseur. L'inverseur comporte également des moyens de guidage 60 constitués par des rails 64 coulissant dans des glissières 62 parallèles, les glissières 62 étant parallèles à l'axe géométrique 22 et attachées aux poutres longitudinales 36, par exemple sur leurs flancs, les rails 64 étant eux-mêmes attachés aux parties mobiles 50. L'inverseur 20 comporte également des moyens de commande 70 constitués habituellement par des vérins à vis attachés au cadre avant 32 et parallèles aux glissières 62, ces vérins assurant le déplacement des parties mobiles 50 dans le sens de l'ouverture 52 et dans le sens de la fermeture 54. A noter que les glissières 62 et les rails 64 sont des pièces mécaniques coulissant l'une dans l'autre avec un jeu réduit. Ainsi, au contraire de la structure fixe 30, les glissières 62 et les rails 64 sont des pièces plus massives et moins susceptibles de se déformer. Les glissières 62 et les rails 64 sont habituellement en queue d'aronde.

Lorsque les parties mobiles 50 recouvrent les ouvertures 38, elles sont maintenus dans cette position dite "fermée" par des verrous attachés à la structure fixe 30. Habituellement, chaque partie mobile 50 est tenu par son extrémité avant par un verrou dit "principal" attaché au cadre avant 32. Le verrou principal peut cependant devenir inopérant en cas de déformation du cadre avant 32 suite à un impact. De ce fait, on dispose habituellement de part et d'autre de chaque partie mobile 50 des verrous dits "de secours" attachés à des endroits différents des verrous principaux.

On se reportera plus particulièrement à la figure 2. Selon l'invention, le système de verrouillage 80 comporte des verrous 82 disposés à l'extrémité arrière 62a de chaque glissière 62 dans le sens de l'ouverture 52, chaque verrou comportant un pêne 110 positionné dans l'alignement de la glissière 62 correspondante, le pêne 110 et donc le verrou 82 étant au voisinage de cette extrémité arrière 62a. Le pêne 110 est mobile entre une position verrouillée et une position ouverte. Lorsque le rail 64 est rentré dans la glissière 62, le pêne 110 en position verrouillée fait obstacle au déplacement du rail 64 dans le sens de l'ouverture 52, le pêne 110 maintenant alors le rail 64 emprisonné dans la glissière 62. En position ouverte, le pêne 110 ne fait plus obstacle et le rail 64 peut alors se déplacer dans le sens de l'ouverture 52. Ce système de verrouillage est donc peu sensible aux déformations de la structure fixe 30, même lorsque ces déformations sont importantes et s'appliquent à l'extrémité 62a des glissières 62, car :
1. le pêne 110 reste dans l'alignement de la glissière 62 et assure donc toujours sa fonction,
2. le rail 64 reste alors emprisonné dans la glissière 62, ce qui maintient la partie mobile 50 dans sa position fermée au dessus de l'ouverture radiale 38 correspondante.

Le verrou 82 peut être attaché à la poutre longitudinale 36. Il peut être aussi attaché, voire intégré, directement à l'extrémité 62a de la glissière 62, ce qui permet de réduire encore le risque d'un déplacement relatif du pêne 110 et de la glissière 62. L'essentiel est que le chemin susceptible de reprendre l'effort entre l'extrémité 62a de la glissière et le point d'attache du verrou sur la structure fixe soit court.

Dans une première forme de mise en oeuvre de l'invention, les verrous 82 sont les verrous principaux.

Toutefois, dans une forme préférée de mise en oeuvre de l'invention, les verrous 82 sont des verrous de secours, l'inverseur comportant par ailleurs des verrous principaux, voire secondaires, selon les techniques connues.

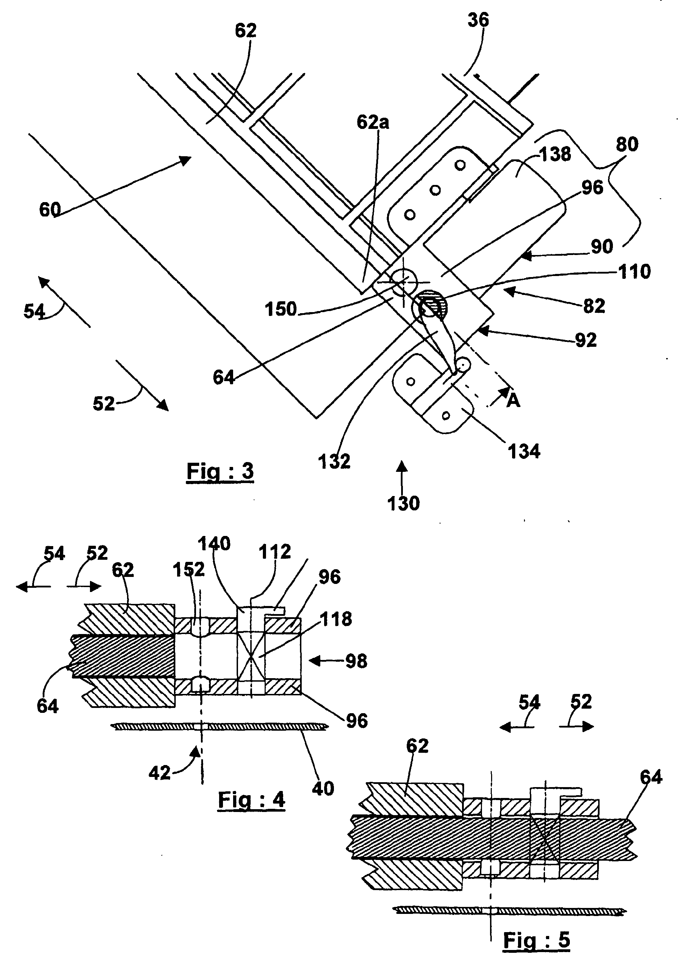

On se reportera maintenant aux figures 2 à 5. Dans cet exemple, le système de verrouillage 80 est utilisé en secours. Le système de verrouillage 80 comporte un verrou 82 comportant lui-même un corps 90 attaché à la poutre longitudinale 36 au voisinage de l'extrémité 62a de la glissière. Le corps 90 comporte lui-même à une extrémité une chape 92 en U, cette chape 92 comportant elle-même une base 94 par laquelle est attachée au reste du corps 90 et deux ailes 96 parallèles et attachées par une extrémité à la base 94. La base 94 et les deux ailes 96 définissent un espace ouvert 98 situé dans le prolongement de la glissière 62 et par conséquent sur la trajectoire du rail 64. En conséquence, le rail 64 passe entre les deux ailes 96 lorsqu'il se déplace dans le sens de l'ouverture 52. Le verrou 82 comporte également un pêne 110 mobile entre une position "fermée" et une position "ouverte". Lorsqu'il est en position fermée, ce pêne 110 fait obstacle au déplacement du rail 64 dans le sens de l'ouverture 52, c'est à dire que le rail 84 vient buter contre le pêne 110 lorsqu'il est rentré dans la glissière 62 et qu'il se déplace dans le sens de l'ouverture 52. Lorsqu'il est en position ouverte au contraire, le pêne 110 ne fait plus obstacle au déplacement du rail 64 dans le sens de l'ouverture. L'exemple illustré par les figures montre un pêne 110 cylindrique monté pivotant, selon un axe géométrique 112, dans les ailes 96 et traversant l'espace ouvert 98 entre les deux ailes 96. Une partie du pêne 110 située entre les ailes 96 est dans l'alignement de la glissière 62 et donc sur la trajectoire du rail 64. Le pêne 110 est donc susceptible de faire obstacle au rail 64 lorsqu'il se déplace dans le sens de l'ouverture 52, ce rail 64 venant buter par son extrémité située dans le sens de l'ouverture 52 contre le pêne 110. Le pêne 110 comporte une échancrure 118 susceptible de laisser passer le rail 64 lorsque le pêne est en position ouverte. Lorsque le pêne 110 est en position ouverte, l'échancrure 118 est dans l'alignement de la glissière 62 et le rail 64 peut alors se déplacer dans le sens de l'ouverture 52 en passant par l'échancrure 118 sans interférer avec le pêne 110. Lorsque le pêne 110 a pivoté d'environ 90° et arrive en position fermée, l'échancrure 118 n'est plus dans l'alignement de la glissière 62. Le pêne 110 fait alors obstacle au déplacement du rail 64 dans le sens de l'ouverture 52, ce qui a pour résultat de maintenir le rail 64 emprisonné dans la glissière 62.

Le système de verrouillage 80 comporte également des moyens de commande 130 du pêne 110. Ces moyens de commande comportent d'abord un levier 132 et un actionneur 134. Le levier 132 est perpendiculaire au pêne 110 et attaché à lui de préférence, mais non obligatoirement, à l'extérieur de la chape en U 92. L'actionneur 134 est attaché à la partie mobile 50 et de préférence au rail 64 de la partie mobile 50. L'actionneur 134 est positionné pour exercer une poussée sur le levier 132 lorsque le rail 64 se déplace dans le sens de la fermeture 54 et arrive en fin de course dans la glissière 62, cette poussée ayant pour effet de faire pivoter le pêne 110 jusqu'en position fermée. Les moyens de commande 130 comportent également un ressort non représenté, par exemple en spirale, ledit ressort exerçant sur le pêne 110 un couple susceptible de le faire pivoter automatiquement jusqu'en position ouverte. Les moyens de commande 130 comportent enfin un cliquet, également non représenté car caché dans le corps du verrou, commandé lui-même par un moteur 138, le cliquet maintenant automatiquement le pêne 110 en position fermée malgré le couple exercé par le ressort, le moteur 138 permettant sur commande de dégager le cliquet afin de libérer le pêne 110 et de le laisser pivoter jusqu'en position ouverte sous l'action du ressort. Le cliquet relève de la mécanique générale. Il peut être constitué, par exemple, par un doigt coulissant dans le corps 90, le doigt étant poussée par un ressort contre le pêne 110, le doigt pénétrant ainsi dans une alvéoles sur le pêne 110 lorsqu'il est en position verrouillé, le doigt faisant alors obstacle au pivotement du pêne 110, le moteur 138 étant susceptible de tirer sur le doigt pour le dégager de l'alvéole et libérer le pêne 110.. Le moteur 138 peut être, par exemple, un moteur électrique linéaire comportant un noyau plongeant dans un solénoïde, le noyau plongeur étant relié à la tige ou constituant une extrémité de cette tige.

L'ouverture des parties mobiles de l'inverseur peut alors s'effectuer de la façon suivante :
- Envoi d'une impulsion aux moteurs 138 afin de dégager les cliquets et de permettre aux ressorts d'exercer sur les pênes 110 un couple capable de les faire pivoter jusqu'en position ouverte, le pivotement complet ne pouvant toutefois pas se faire à ce niveau car les leviers 132 viennent buter sur les actionneurs 134.
- Translation des parties mobiles 50 dans le sens de l'ouverture 52 et par répercussion des actionneurs 134, ce qui a pour effet de libérer les leviers 132 et de permettre aux ressorts de faire pivoter les pênes 110 jusqu'en position ouverte. Dans cette position, les échancrures 118 sont maintenant dans l'alignement des glissières 62 ce qui permet de poursuivre la translation des parties mobiles 50 vers l'arrière 26 jusqu'au dégagement complet des ouvertures radiales 38, les rails 64 passant dans les échancrures 118 correspondantes.

La fermeture des parties mobiles de l'inverseur peut ensuite s'effectuer de la façon suivante :
- Translation dans le sens de la fermeture 54 des parties mobiles 50 et par répercussion des actionneurs 134, les rails 64 rentrant complètement dans les glissières 62 et les parties mobiles 50 recouvrant les ouvertures 38.
- Lorsque les rails 64 arrivent vers la fin de course et ne sont plus dans les échancrures 118, les actionneurs 134 appuient sur les leviers 132 et provoquent la rotation des pênes 110 jusqu'en position verrouillée sous l'effet de la translation dans le sens de la fermeture 54 des parties mobiles 50 et des actionneurs associés 134.
- Lorsque les pênes arrivent en position verrouillée, les cliquets 138 s'enclenchent automatiquement sous l'effet de la poussée des ressorts, les cliquets maintenant alors automatiquement pênes 110 dans cette position verrouillée.

On comprend que le verrou 82 peut avoir une forme "massive" et être disposé dans un espace réduit au bout d'une glissière 62, ce qui apporte deux avantages à l'invention :
- Elle peut être mise en oeuvre sur des inverseurs minces, donc de faible épaisseur.
- Le verrou 82 peut retenir le rail 64 dans la glissière 62 avec une force très importante sans générer de couples importants sur le reste de la structure fixe ce qui permet de le maintenir sur cette structure fixe 30 avec seulement une ferrure légère.

Un autre avantage de l'invention est que le rail bute par son extrémité sur le pêne, ce qui ne génère pas de couple sur le rail.

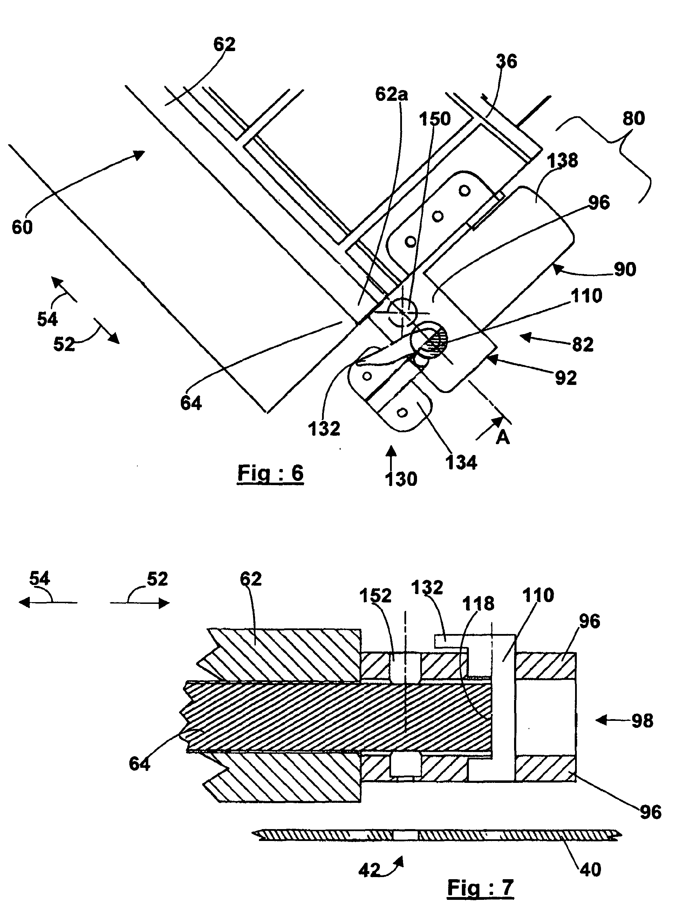

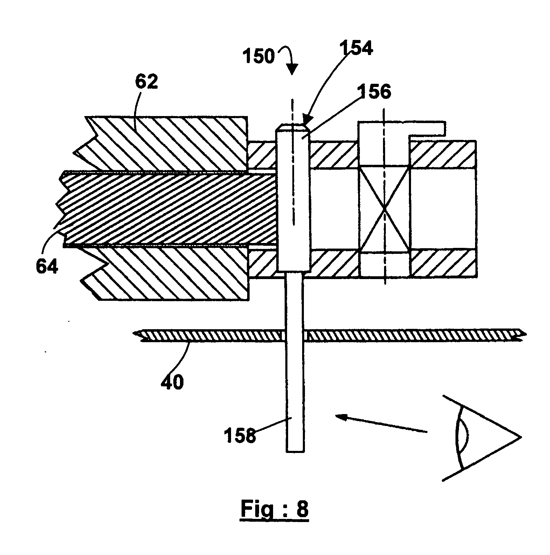

On se reportera maintenant aux figures 6, 7 et 8. Lorsque l'avion doit repartir alors qu'un inverseur est défectueux et n'a pas pu être réparé, il est indispensable de neutraliser visiblement cet inverseur, ses parties mobiles devant rester en position fermée de façon fiable. Pour cela, l'invention propose également un dispositif d'inhibition 150 intégré au système de verrouillage, ce dispositif d'inhibition 150 comportant dans la chape en U 92 un alésage 152 susceptible de recevoir et de retenir une tige d'inhibition 154, cet alésage 152 étant positionné pour que la tige d'inhibition 154, lorsqu'elle est présente, fasse obstacle au déplacement du rail 64 dans le sens de l'ouverture 52. Cette tige d'inhibition 154 peut être simplement disposée à la main par l'agent de maintenance. La rétention de la tige d'inhibition 154 dans l'alésage 152 peut se faire par tout moyen. Cette tige d'inhibition 154 est prolongée par une queue 156 de longueur suffisante pour pouvoir passer par un trou 42 du capotage 40 et être ainsi visible de l'extérieur comme cela est illustré par la figure 8. Dans l'exemple illustré par la figure 8, la queue 158 a un diamètre plus faible que le corps 156 de façon à former un épaulement qui vient par gravité au contact d'un autre épaulement aménagé dans l'alésage 152. Pendant l'inspection précédant le vol de l'avion, cette queue 156 permet de vérifier visuellement que le fonctionnement de l'inverseur 20 est bien inhibé. L'alésage 152 est de préférence, mais non obligatoirement, disposé entre le pêne 110 et l'extrémité 64a du rail 64 lorsque celui-ci est en bout de course dans le sens de la fermeture 54. Ceci permet de bloquer les parties mobiles 50 dans une position très voisine de la position fermée.

## Revendications

1. Inverseur (20) de poussée à grille pour turboréacteur à double flux comportant une pluralité d'ouvertures radiales (38) séparées par des poutres longitudinales (36), les ouvertures radiales (38) étant occultées par des parties mobiles (50) se déplaçant dans le sens de la fermeture (54), et étant dégagées lorsque ces parties mobiles (50) se déplacent dans le sens de l'ouverture (52), ledit inverseur (20) comportant des moyens de guidage (60) des parties mobiles (50), les moyens de guidage (60) comportant des rails (64) attachés aux parties mobiles (50) et des glissières (62) attachées aux poutres longitudinales (36), les rails (64) coulissant dans les glissières (62), est ledit inverseur (20) étant équipé d'un système de verrouillage (80) comportant des verrous (82), **caractérisé en ce que** les verrous (82) sont fixés au niveau de l'extrémité (62a) de chaque glissière (62) dans le sens de l'ouverture (52), chaque verrou comportant un pêne (110) positionné dans l'alignement de la glissière (62) correspondante, le pêne (110) étant mobile entre une position verrouillée et une position ouverte, le pêne (110) en position verrouillée faisant obstacle au déplacement du rail (64) dans le sens de l'ouverture (52) quand ce rail (64) est rentré dans la glissière (62), le pêne (110) en position ouverte ne faisant plus obstacle au déplacement du rail (64) dans le sens de l'ouverture (52).

2. Inverseur (20) de poussée selon la revendication 1, **caractérisé en ce que** le verrou (82) est attaché à la poutre longitudinale (36).

3. Inverseur (20) de poussée selon la revendication 1, **caractérisé en ce que** le verrou (82) est attaché à l'extrémité (62a) de la glissière (62).

4. Inverseur de poussée selon l'une des revendications 1 à 3, **caractérisé en ce que** les verrous (82) sont les verrous principaux.

5. Inverseur (20) de poussée selon l'une des revendications 1 à 3, **caractérisé en ce que** les verrous (82) sont des verrous de secours.

6. Inverseur (20) de poussée selon la revendication 5, **caractérisé en ce que** le verrou (82) comporte un corps (90) attaché à la poutre longitudinale (36), le corps (90) comportant une chape (92) en U supportant un pêne (110) cylindrique et pivotant, la partie du pêne (110) située entre les ailes (96) étant dans l'alignement de la glissière (62) et comportant une échancrure (118), ladite échancrure (118) étant dans l'alignement de la glissière (62) lorsque le pêne (110) est en position ouverte, ladite échancrure (118) laissant alors passer le rail (64) lorsqu'il se déplace dans la glissière (62), le système de verrouillage (80) comportant également des moyens de commande (130) pour actionner le pêne (110) entre la position verrouillée et la position ouverte.

7. Inverseur (20) de poussée selon la revendication 6, **caractérisé en ce que** les moyens de commande (130) comportent un actionneur (134) attaché à l'ensemble partie mobile (50) + rail (64), un levier (132) attaché au pêne (110), un ressort exerçant sur le pêne (110) un couple susceptible de le faire pivoter jusqu'en position ouverte, un cliquet immobilisant automatiquement le pêne (110) lorsqu'il est en position verrouillée et un moteur (140) pour dégager sur commande le cliquet, l'actionneur (134) exerçant une poussée sur le levier (132) lorsque le rail (64) se déplace dans le sens de la fermeture (54) et arrive en fin de course dans la glissière (62), cette poussée ayant pour effet de faire pivoter le pêne (110) jusqu'en position fermée.

8. Inverseur (20) de poussée selon la revendication 6 ou 7, **caractérisé en ce qu'**il comporte un alésage (152) et une tige d'inhibition (154), cet alésage (152) étant disposé dans la chape en U (92), cet alésage (152) étant positionné pour que la tige d'inhibition (154), lorsqu'elle est présente dans l'alésage (152), fasse obstacle au déplacement du rail (64) dans le sens de l'ouverture (52).

9. Inverseur (20) de poussée selon la revendication 8, la tige d'inhibition (154) étant présente dans l'alésage (152), **caractérisé en ce que** la tige d'inhibition (154) est prolongée par une queue (156) de longueur suffisante pour pouvoir passer par un trou (42) du capotage (40) et être ainsi visible de l'extérieur.

## Claims

1. Screen-type thrust reverser (20) for a by-pass turbojet engine, said reverser having a plurality of radial apertures (38) separated by longitudinal beams (36), said radial apertures (38) being concealed by moving parts (50) which are displaced in the direction of closing (54), and being cleared when the said moving parts (54) are displaced in the direction of opening (52), the said reverser (20) having means (60) for guiding the moving parts (50), said guide means (60) having rails (64) attached to the moving parts (50) and slides (62) attached to the longitudinal beams (36), said rails (64) sliding in said slides (62), and the said reverser (20) being equipped with a locking system (80) having bolts (82), **characterised in that** the bolts (82) are fixed at the end (62a) of each slide (62) in the direction of opening (52), each bolt having a latch (110) positioned in line with the corresponding slide (62), said latch (110) being movable between a locked position and an open position, the latch (110) in the locked position obstructing the displacement of the rail (64) in the direction of opening (52) when the said rail (64) has re-entered the slide (62), and the latch (110) in the open position no longer obstructing the displacement of the rail (64) in the direction of opening (52).

2. Thrust reverser (20) according to Claim 1, **characterised in that** the bolt (82) is attached to the longitudinal beam (36).

3. Thrust reverser (20) according to Claim 1, **characterised in that** the bolt (82) is attached to the end (62a) of the slide (62).

4. Thrust reverser (20) according to one of Claims 1 to 3, **characterised in that** the bolts (82) are the main bolts.

5. Thrust reverser (20) according to one of Claims 1 to 3, **characterised in that** the bolts (82) are emergency bolts.

6. Thrust reverser (20) according to Claim 5, **characterised in that** the bolt (82) has a body (90) which is attached to the longitudinal beam (36), said body (90) having a U-shaped yoke (92) supporting a cylindrical and pivoting latch (110), that part of said latch (110) which is situated between the flanges (96) being in line with the slide (62) and having a cut-out portion (118), the said cut-out portion (118) being in line with the slide (62) when the latch (110) is in the open position, the said cut-out portion (118) then allowing the rail (64) to pass through when it is displaced in the slide (62), the locking system (80) also having control means (130) for actuating the latch (110) between the locked position and the open position.

7. Thrust reverser (20) according to Claim 6, **characterised in that** the control means (130) have an actuator (134) attached to the moving part (50) + rail (64) combination, a lever (132) attached to the latch (110), a spring exerting on said latch (110) a torque which is capable of causing it to pivot as far as the open position, a pawl which automatically immobilises said latch (110) when it is in the locked position, and a motor (140) for freeing said pawl on command, the actuator (134) exerting a thrust on the lever (132) when the rail (64) is displaced in the direction of closing (54) and arrives at the end of its travel in the slide (62), the said thrust having the effect of causing the latch (110) to pivot as far as the closed position.

8. Thrust reverser (20) according to Claim 6 or 7, **characterised in that** it has a bore (152) and an inhibiting rod (154), the said bore (152) being arranged in the U-shaped yoke (92), the said bore (152) being positioned so that the inhibiting rod (154), when it is present in said bore (152), obstructs the displacement of the rail (64) in the direction of opening (52).

9. Thrust reverser (20) according to Claim 8, the inhibiting rod (154) being present in the bore (152), **characterised in that** the inhibiting rod (154) is extended by a tail (158) which is sufficiently long to be able to pass through a hole (42) in the cowling (40) and thus be visible from the outside.

## Patentansprüche

1. Schubumkehr (20) mit Gatter für ein Zweikreis-TL-Triebwerk, umfassend eine Vielzahl von Radialöffnungen (38), die durch Längsträger (36) getrennt sind, wobei die Radialöffnungen (38) durch bewegliche Teile (50) verdeckt sind, die sich in Verschlussrichtung (54) verschieben, und freigelegt werden, wenn sich diese beweglichen Teile (50) in Öffnungsrichtung (52) verschieben, wobei die Umkehrvorrichtung (20) Führungsmittel (60) für die beweglichen Teile (50) umfasst, wobei die Führungsmittel (60) Schienen (64), die mit den beweglichen Teilen (50) verbunden sind, und Gleitschienen (62) umfassen, die mit den Längsträgern (36) verbunden sind, wobei die Schienen (64) in den Gleitschienen (62) gleiten, und wobei die Umkehrvorrichtung (20) mit einem Verriegelungssystem (80) versehen ist, umfassend Riegel (82), **dadurch gekennzeichnet, dass** die Riegel (82) im Bereich des Endes (62a) jeder Gleitschiene (62) in Öffnungsrichtung (52) befestigt sind, wobei jeder Riegel ein in der Ausrichtung der entsprechenden Gleitschiene (62) angeordnetes Riegelelement (110) umfasst, wobei das Riegelelement (110) zwischen einer verriegelten Position und einer offenen Position beweglich ist, wobei das Riegelelement (110) in verriegelter Position ein Hindernis für die Verschiebung der Schiene (64) in Öffnungsrichtung (52) darstellt, wenn diese Schiene (64) in die Gleitschiene (62) eingesetzt ist, und wobei das Riegelelement (110) in offener Position nicht weiter ein Hindernis für die Verschiebung der Schiene (64) in Öffnungsrichtung (52) darstellt.

2. Schubumkehr (20) nach Anspruch 1, **dadurch gekennzeichnet, dass** der Riegel (82) am Längsträger (36) befestigt ist.

3. Schubumkehr (20) nach Anspruch 1, **dadurch gekennzeichnet, dass** der Riegel (82) am Ende (62a) der Gleitschiene (62) befestigt ist.

4. Schubumkehr nach einem der Ansprüche 1 bis 3, **dadurch gekennzeichnet, dass** die Riegel (82) Hauptriegel sind.

5. Schubumkehr (20) nach einem der Ansprüche 1 bis 3, **dadurch gekennzeichnet, dass** die Riegel (82) Sicherheitsriegel sind.

6. Schubumkehr (20) nach Anspruch 5, **dadurch gekennzeichnet, dass** der Riegel (82) einen Körper (90) umfasst, der am Längsträger (36) befestigt ist, wobei der Körper (90) eine U-förmige Abdeckung (92) umfasst, die ein zylindrisches und schwenkbares Riegelelement (110) trägt, wobei der Teil des Riegelelements (110), der sich zwischen den Flügeln (96) befindet, in der Ausrichtung der Gleitschiene (62) ist und eine Einkerbung (118) umfasst, wobei die Einkerbung (118) in der Ausrichtung der Gleitschiene (62) ist, wenn sich das Riegelelement (110) in offener Position befindet, wobei die Einkerbung (118) nun die Schiene (64) durchlässt, wenn sie sich in der Gleitschiene (62) verschiebt, wobei das Verriegelungssystem (80) auch Steuermittel (130) umfasst, um das Riegelelement (110) zwischen der verriegelten und der offenen Position zu betätigen.

7. Schubumkehr (20) nach Anspruch 6, **dadurch gekennzeichnet, dass** die Steuermittel (130) ein Betätigungselement (134), das an der Gesamtheit beweglicher Teil (50) + Schiene (64) befestigt ist, einen Hebel (132), der am Riegelelement (110) befestigt ist, eine Feder, die auf das Riegelelement (110) ein Moment ausübt, das ihn in die offene Position schwenken lassen kann, eine Sperrklinke, die automatisch das Riegelelement (110) feststellt, wenn es sich in verriegelter Position befindet, und einen Motor (140) umfassen, um auf Befehl die Sperrklinke zu lösen, wobei das Betätigungselement (134) einen Schub auf den Hebel (132)) ausübt, wenn sich die Schiene (64) in Verschlussrichtung (54) verschiebt und am Anschlag in der Gleitschiene (62) ankommt, wobei dieser Schub bewirkt, dass das Riegelelement (110) in die geschlossene Position geschwenkt wird.

8. Schubumkehr (20) nach Anspruch 6 oder 7, **dadurch gekennzeichnet, dass** sie eine Bohrung (152) und eine Verhinderungsstange (154) umfasst, wobei diese Bohrung (152) in der U-förmigen Abdeckung (92) angeordnet ist, wobei diese Bohrung (152) derart positioniert ist, dass die Verhinderungsstange (154), wenn sie in der Bohrung (152) vorhanden ist, ein Hindernis für die Verschiebung der Schiene (64) in Öffnungsrichtung (52) darstellt.

9. Schubumkehr (20) nach Anspruch 8, wobei die Verhinderungsstange (154) in der Bohrung (152) vorhanden ist, **dadurch gekennzeichnet, dass** die Verhinderungsstange (154) von einem Endstück (156) mit ausreichender Länge verlängert ist, um durch ein Loch (42) der Abdeckung (40) geführt zu werden und so von außen sichtbar zu sein.
